# EUROPEAN PATENT SPECIFICATION

(11) **EP 4 413 694 B1**
(45) Date of publication and mention of the grant of the patent: **06.05.2026**
(21) Application number: 22800420.6
(22) Date of filing: 03.10.2022
(51) Int. Cl.: H04L 9/40, G06F 21/62, G06F 21/60

(54) **POLICY-GOVERNED CRYPTOGRAPHIC SELECTION SYSTEM**
RICHTLINIENGEGNERTES KRYPTOGRAFISCHES AUSWAHLSYSTEM
SYSTÈME DE SÉLECTION CRYPTOGRAPHIQUE RÉGI PAR UNE POLITIQUE

(30) Priority: 04.10.2021 US 202117493681
(43) Date of publication of application: 14.08.2024
(73) Proprietor: VMware LLC, Palo Alto, CA 94304 (US)
(72) Inventor: BENSON, Mark, Reading (GB); BEVERIDGE, Daniel James, Valrico, Florida 33596 (US); BROTHERSON, Marc Wayne, Boulder, Colorado 80303 (US); HUNTLEY, Sean James, Sydney, New South Wales 2000 (AU); JENKINS, Akeem Lamar, Broomfield, Colorado 80020 (US); MOREAU, Dennis, San Carlos, California 94070 (US); OTT, David, Palo Alto, California 94304 (US)
(74) Representative: Dilg, Haeusler, Schindelmann Patentanwaltsgesellschaft mbH
(86) International application number: PCT/US2022/045578
(87) International publication number: WO 2023/059570

(56) References cited:
- US-A1- 2010 281 270
- US-A1- 2012 131 354
- US-A1- 2017 006 064
- US-A1- 2019 273 728

## Description

### FIELD

The present disclosure relates generally to configuring an application or service with reconfigurable cryptographic algorithms. In particular, the cryptographic algorithms can be manually or autonomously reconfigured based upon administrator-defined cryptographic policies.

### BACKGROUND

The demand for improvements in cryptography-based security measures continue to increase and scale with the increasing ability of processors to break through and defeat cryptography-based security measures. Substantial increases in processing power associated with the introduction of quantum computing makes these improvements even more necessary. Unfortunately, conventional cryptographic configurations are generally implemented using hard-coded API calls to particular cryptographic features contained in a static cryptographic library. These hardcoded API calls make adapting to the rapidly changing security threat environment slow and costly since programmers are often needed to make manual changes to the software applications and systems to implement changes that keep the software applications and systems secure. In extreme circumstances, these systems and applications may be forced to reduce functionality or even shutdown until they are able to implement cryptographic features needed to ensure secure operations. Consequently, solutions for reducing the overhead and time needed to implement changes to the cryptographic configurations are desirable.

US 2012/131354 A1 describes an encryption service system that comprises an API for receiving requests from one or more calling applications. Each request comprises information identifying the operations to be performed on data to be processed and information identifying the origin and target of the data. The encryption service system further comprises a cryptographic server for processing the requests and determining, for each request, an encryption policy to be applied.

### SUMMARY

This disclosure describes policy-governed mechanisms for dynamically changing cryptographic library and algorithm usage.

The invention is defined by the independent claims. Further embodiments are defined by the dependent claims.

Other aspects and advantages of the invention will become apparent from the following detailed description taken in conjunction with the accompanying drawings which illustrate, by way of example, the principles of the described embodiments.

### BRIEF DESCRIPTION OF THE DRAWINGS

The disclosure will be readily understood by the following detailed description in conjunction with the accompanying drawings, wherein like reference numerals designate like structural elements.
FIG. 1 shows a block diagram illustrating a cryptographic framework associated with a software application.
FIG. 2 shows a block diagram illustrating an exemplary application or system, in accordance with the embodiments described herein.
FIG. 3 shows a block diagram illustrating an implementation of a cryptographic selection system embedded within a software application, in accordance with the embodiments described herein.
FIG. 4 shows a block diagram illustrating an implementation of a cryptographic agility outside a software application, in accordance with the embodiments described herein.
FIG. 5 shows a block diagram illustrating the operation of multiple cloud services implementing a cryptographic selection system.
FIG. 6 shows a flow diagram illustrating a process for updating a cryptographic library.
FIG. 7 shows a flow diagram illustrating a process for operating a cryptographic selection system.

### DETAILED DESCRIPTION

Certain details are set forth below to provide a sufficient understanding of various embodiments of the invention. However, it will be clear to one skilled in the art that embodiments of the invention can be practiced without one or more of these particular details. Moreover, the particular embodiments of the present invention described herein are provided by way of example and should not be used to limit the scope of the invention to these particular embodiments. In other instances, hardware components, network architectures, and/or software operations have not been shown in detail in order to avoid unnecessarily obscuring the invention.

Cryptographic frameworks and algorithms are a foundation of security protocols used in many software applications and systems for secure communications. Due to cyber security threats from quantum computing, malware, phishing, and the like to secure communications, cybersecurity algorithms are constantly evolving to protect against evolving cyber threats. Updating software applications or systems to incorporate latest cybersecurity algorithms and security protocols using existing interfaces can be complicated and may require a user or an organization to spend a considerable amount of time.

In addition to constantly updating the cryptographic algorithms and security protocols, software applications may be required to support alternative cryptographic algorithms and/or security protocols depending on state or context of the user using the applications or system, a state of the device used by the user for accessing resources, and the like. For example, weak or compromised algorithms (e.g., RSA) may need to be replaced with strong algorithms when a user is trying to access a resource from a network in a high security threat area. Accordingly, depending on the circumstances surrounding a user or a user device, different algorithms from a range of cryptographic algorithms may be required for protecting secure data. Directly incorporating the latest advanced algorithms within existing systems or applications may require extensive work at significant cost and the implementation may cause delays if the algorithm is not widely accepted. Modifying every single application on a large scale to rapidly adopt existing cryptographic frameworks to arising threats is complex and costly.

One way in which cryptography-based security measures can be improved is to configure the cryptographic frameworks, upon which the security measures are based, with the ability to quickly make adjustments. For example, this allows a compromised cryptographic feature employed by an existing application to be quickly replace with a more secure cryptographic feature. The ability to rapidly reconfigure the cryptographic frameworks also allows the cryptographic frameworks to be configured to leverage different features or entire cryptographic libraries based on specific use cases. For example, in response to a request for services from a device operating outside of a trusted computer network, the service could be configured to leverage more secure cryptographic features and/or libraries in order to satisfy security policies. This ability for the cryptography framework to agilely reconfigure allows users operating on more secure networks or from more secure locations to benefit from lower overhead cryptography, while maintaining higher security only when needed.

The present embodiments also enable automated selection of one or more cryptographic libraries and/or algorithms and configuration of cryptographic framework based on contextual data surrounding a cryptographic transaction (e.g., access to secure resource or secure communication). The contextual data may indicate sensitivity of data being protected, user's role participating in a data exchange or communication, the communication network detail, the characteristics of devices involved, the nature of the application, and the like.

The ability to automatically select among cryptographic algorithms and key configuration parameters for optimal protection based on the context data (or contextual information) allows the cryptographic frameworks to be configured to leverage multiple cryptographic libraries depending the circumstances. The cryptographic agility, discussed in the present invention, allows an application or system to consume any library or algorithm it may require in a given circumstance.

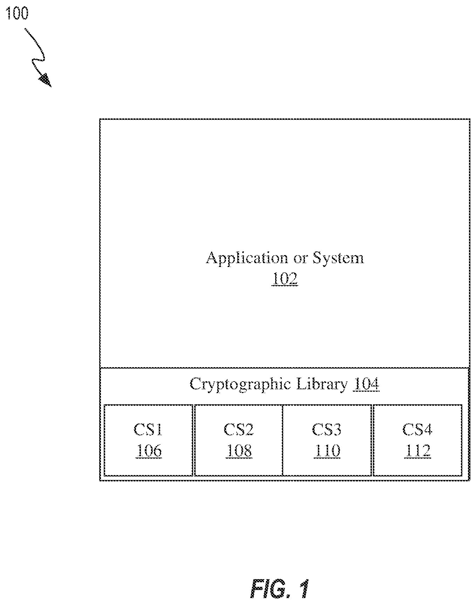

These and other embodiments are discussed below with reference to FIGS. 1 - 7. Those skilled in the art, however, will readily appreciate that the detailed description given herein with respect to these figures is for explanatory purposes only and should not be construed as limiting.

FIG. 1 shows a block diagram illustrating a software application or system 102 equipped with a conventional cryptographic library 104. Cryptographic library 104 includes cipher suites 106 - 112. In some embodiments cryptographic library 104 can include a larger or smaller number of cipher suites. Each of the cipher suites typically includes multiple related ciphers that can be implemented alone or in combination to implement one or more cryptographic features. The cryptographic features enabled by cryptographic library 104 are generally implemented by hard coding references to the cryptographic features of cryptographic library 104 into software or application system 102. Therefore making any updates to the many features and protocols supported by cryptographic library 104 can be a manual time consuming process.

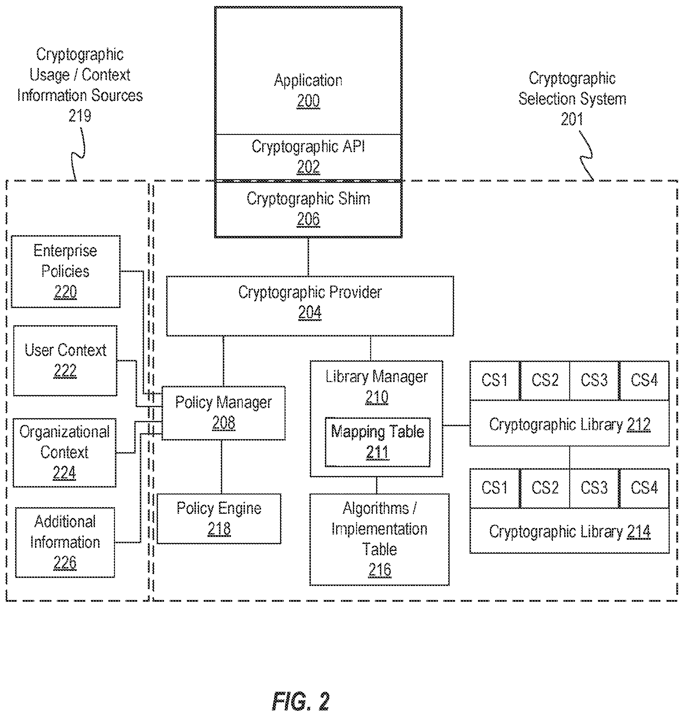

FIG. 2 shows a block diagram illustrating an exemplary software application or system 200 that includes a cryptographic selection system 201 in accordance with the described embodiments. Application 200 includes a cryptographic API 202 for generating abstracted cryptographic API calls when operation of application 200 requires a cryptographic feature such as, e.g., digital signatures, cryptographic hardware acceleration or some other form of cryptographic protocol. Cryptographic shim 206 is configured to intercept calls made by cryptographic API 202 and forward the cryptographic API calls to cryptographic provider 204. In some embodiments, cryptographic shim 206 performs some amount of translation or adaptation to the abstracted cryptographic API calls prior to forwarding the API calls to cryptographic provider 204. For example, cryptographic shim 206 can be configured to perform any one of the following actions: pad parameter values generated by application 200 so they are the right width to be accepted by a particular cryptographic feature; map parameter types between schema; navigate library function calls with different numbers or ordering of input parameters; initialize a cryptographic library prior to passing on function calls supported by the cryptographic library; navigate and populate any special parameters specific to a particular cryptographic feature such as an error flag, an entropy parameter, or the like; interpret the return value of a library function call (e.g. library specific code values indicating success or error); and translate a generic call to a specific number of security strength bits for a specific cryptographic feature.

Cryptographic provider 204 is then responsible for processing the API calls received from the cryptographic shim and interacts with two primary modules: policy manager 208 and library manager 210 to assist in executing the abstracted cryptographic API calls generated by application 200.

Library manager 210 is configured to manage cryptographic libraries. While library manager 210 is depicted managing cryptographic libraries 212 and 214 it should be appreciated that library manager 210 can be configured to manage any number of cryptographic libraries needed to support the operation of application 200. Library manager 210 is responsible for providing access to one or more cryptographic features included in cryptographic libraries 212 and 214 in response to the API calls received by cryptographic provider 204. Library manager 210 is also configured to assist with updating existing cryptographic features and registering new cryptographic features. A cryptographic feature can take the form of a cryptographic algorithm, protocol, function, or combination of cryptographic algorithms, protocols or functions.

In some embodiments, library manager 210 includes a mapping table 211, which associates particular cryptographic features with tags configured to associate the cryptographic features contained within cryptographic libraries 212 and 214 with particular functions and capabilities. Whenever updates are made to one of cryptographic libraries 212 and 214, library manager 210 is configured to update mapping table 211 to associate any new or updated cryptographic features with one or more tags.

New cryptographic features can be added to cryptographic selection system 201 by first referencing algorithms / implementation table 216, which can include a listing and/or locations of all potential cryptographic algorithms, libraries, functions, rules and the like compatible with cryptographic provider 204 and then selecting one or more cryptographic features from algorithms / implementation table 216 for registration with cryptographic selection system 201. It should be noted that, while algorithms / implementation table 216 is depicted as being directly attached to library manager 210, algorithms / implementation table 216 can also be maintained and/or stored at a location outside of an attached storage or a local network.

In some examples, library manager 210 can be managed using a user interface operated through application 200 and/or through another management application. The user interface allows a user to register one or more new cryptographic features listed in algorithms / implementation table 216 to update cryptographic selection system 201. For example, an administrator could access the user interface to configure one or more of the cryptographic libraries with cipher suites supporting different bit rates or types of encryption.

Policy manager 208 is responsible for managing policy engine 218. Policy engine 218 can take the form of a user-defined and/or autonomously compiled list of policies that establish rules for the operation of cryptographic selection system 201. Policy engine 218 can be implemented as a rule engine, a table, a neural network or the like. The list of policies stored in policy engine 218 affect how library manager 210 of cryptographic provider 204 operates to manage implementation of various cryptographic features included in cryptographic libraries 212 and 214. When an API call is received at cryptographic provider 204, cryptographic provider 204 leverages the list of policies contained in policy engine 218 and managed by policy manager 208 to select one or more cryptographic feature suitable for handling the abstracted cryptographic API call. In some embodiments, policy engine 218 specifies a particular cryptographic feature or features contained within one of cryptographic libraries 212 and 214 for use in response to an API call.

In some embodiments, a policy associated with the API call specifies a tag identifying a solution class defined and maintained within mapping table 211. The identified cryptographic feature or tag is then transmitted to library manager 210. In the case a tag is transmitted to library manager 210, library manager 210 uses mapping table 211 to identify which cryptographic feature or features is associated with the tag. Library manager 210 then instructs cryptographic provider 204 which cryptographic feature or features to implement in response to the received API call. It should be noted that in some embodiments an API call can be associated with multiple tags. This set of cryptographic features used in responding to the API call can be referred to as a cipher solution. This system of using tags associated with functionality in the policy engine instead of particular cryptographic functions allows library manager 210 and policy manager 208 to operate independently from one another. This reduces the need for coordination between the library and policy managers outside of passing tags from the policy manager to the library manager. It should be noted that while FIG. 2 shows any communication between the library manager and policy manger are routed through the cryptographic

In some embodiments, the abstracted cryptographic API call can take the form of a request for data encryption of a particular type of data. A first policy associated with the API call can specify that the encryption for that type of data be of a specific type (e.g., FIPS compliant encryption) and a second policy associated with the API call can specify that the encryption be of a minimum security strength (i.e. number of bits) or key size for the specified type of data associated with the API call.

In some embodiments, policy engine 218 can be managed at least in part autonomously by making changes to enterprise policies 220. Enterprise policies 220 is one of cryptographic usage / context information sources 219 and are generally managed by a network administrator, allowing for hierarchical network-wide implementation of policies for managing multiple applications having cryptographic frameworks in accordance with the described embodiments. In some embodiments, policy engine 218 can include policies selected based on user context 222, organizational context 224 and/or additional information 226. User context 222 can include data such as a user's location, the user's identity, the nature of the data to be protected, the user's access level, the speed and/or characteristics of the local network the user is accessing, the geographic location of the user, the application context and more. In embodiments where policy engine 218 includes tags identifying particular desired functionalities, in lieu of specifying particular cryptographic features, policy engine 218 assigns the policies it manages tags configured to meet security requirements specified by the enterprise policies.

In some examples, user context 222 would be supplied to cryptographic provider 204 to assist in selection of the right cryptographic feature to meet a respective abstracted cryptographic API call. For example, a policy stored within policy engine 218 could specify that higher minimum levels of encryption are required for users operating outside of a trusted network environment. The higher minimum level of encryption can be specified by a particular tag in the policy corresponding to a specific level of encryption associated with that tag and identified in mapping table 211. When user context 222 indicates the user is operating outside the trusted network, that higher minimum level of encryption rule would be applied when cryptographic provider 204 is selecting a suitable cryptographic feature for responding to a respective API call.

In some examples, entire cryptographic libraries can be dedicated to handling API calls associated with users of a specific type or operating from a particular location. Organizational context 224 can apply in a similar manner to user context 222. For example, applications grouped under a first organization might have a different set of policies than applications grouped under a second organization. These types of policies would generally be implemented by an information security IT team for each organization. For example, the organizational policies might specify different cryptographic features be used in different regions of the world or that different cryptographic features be used based on which business sector or project the request for access is associated with. In some embodiments, certain policies such as FIPS compliant cryptography could be required for all communications associated with a particular company or organization.

Additional information 226 can include other types of contextual information, such as, for example, certificate alert information for a particular usage context (e.g. transactions utilizing systems running Windows 10 versions a threshold number of versions old and/or versions containing a known critical security vulnerability can be identified as they may require additional security mitigation).

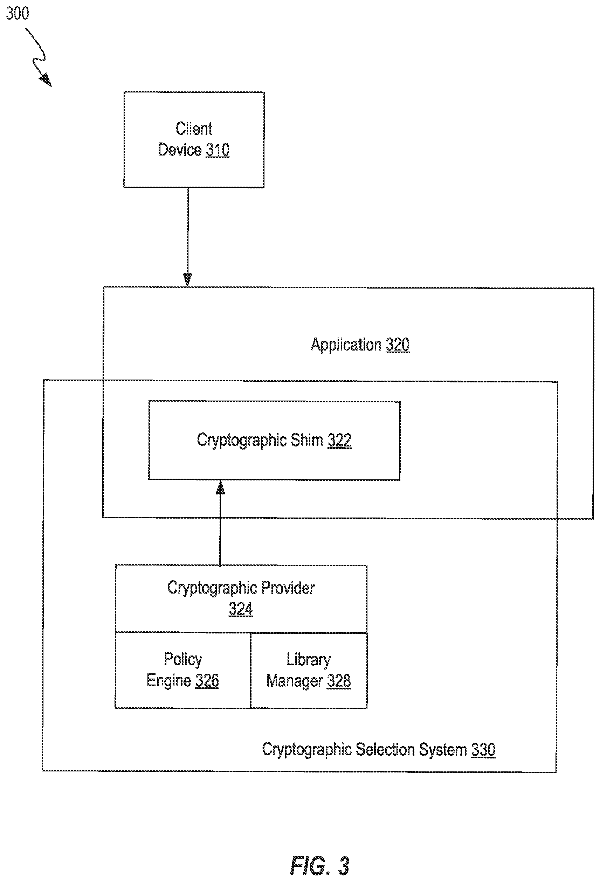

FIG. 3 shows a block diagram illustrating an implementation of a cryptographic selection system embedded within a software application, in accordance with the embodiments described herein. FIG. 3 depicts cryptographic system 300 which includes a client device 310 that may represent a computing or a processing device. In the above examples, the client device 310 may be a desktop computer, a mobile telephone or smartphone, a personal digital assistant (PDA), a laptop computer, or a tablet computer. In some examples, the client device 310 may be a computing device or a server device in communication with a different computing device.

In some examples, the client device 310 may interact with at least one server(s) or other computing device(s) over a communications network. The client device 310 may communicate with other computing device(s) or servers (e.g., application 200) over a network directly or indirectly via any suitable intermediate device(s) or network(s). For example, the client device 310 may communicate via one or more cellular base stations or one or more wireless access points such as IEEE 803.11. In some examples, the client device 310 may direct a user's request to an application 200 within the system 300. The application 200 may be a web application, a computing environment hosted on a server, or a data file on a server. In some examples, the application 200 may be installed on the client device 310 or is accessible from the client device 310 using a web browser.

In some examples, the application 200 may enable a user to perform different actions such as accessing one or more resources or secure data at a server, securely communicate with other devices, and the like from the client device 310. A server hosting the application 200 may be any type of known computer, server, or data processing device. The server may further include RAM, ROM, network interface, input/output interfaces, and memory. The one or more resources or secure data may reside on a server hosting the application 200 or on a different device or a server connected to the application 200 through the network, via direct or indirect connection or some other network.

In some examples, a user's requests or queries from client device 310 are directed to the application 200. The application 200 may be capable of handling cryptographic operations involving modern cryptography standards using the cryptographic selection system 201. The cryptographic selection system 201 enables automated configurations and adjustments to cipher solutions for providing secure data access, communications and other operations for the application 200. Specifically, the cryptographic selection system 201 enables automated selection and configuration of cryptographic libraries (or algorithms within libraries) based on contextual information (e.g., user context 222) or key facts surrounding the user and user device such as user's access level, the speed and/or characteristics of the network the user is accessing, the geographic location of the user, the sensitivity of data being protected, user roles participating in a data exchange, the network context, the characteristics of devices involved, the nature of the application, and the like. In some examples, contextual information may be a user's identity, a device type (e.g., personal, company, etc.), nature of data (e.g., confidential, person, public, etc.), nature of application (e.g., company database, web service, etc.), network (e.g., enterprise or outside US), and the like.

Based on the contextual information, sets of policies and available libraries, the cryptographic selection system 201 automatically selects among cryptographic algorithm alternatives and key configuration parameters for optimal protection to operations involving the application 200. The cryptographic selection system 201 may determine a situation surrounding the user and the user's device, determines what cipher solution (e.g., selection of algorithms and/or libraries) is required to process the user's transaction(s), and configure or select a cipher solution for processing the user's request(s). In some examples, the cipher solution is a solution or framework required for one or more cryptographic operations for processing a user's request for one or more operations involving the application 200. Specifically, a cipher solution is a selection of one or more libraries, algorithms, functions, or processes. Updates to the cipher solution can be based on cryptographic policies, available algorithms and libraries, and contextual information.

In some examples, the application 200 includes a cryptographic API (e.g., 202 as shown in FIG. 2) for handling cryptographic operations involving the application 200. In the above examples, in response to a user's request, the cryptographic API may be used for interacting with and making calls to a cryptographic provider 204 for handling cryptographic operations. The cryptographic shim 206 is configured to transparently intercept calls to cryptographic API and makes generic calls to the cryptographic provider 204 for handling any cryptographic operations using policy manager 208 and library manager 210.

In some examples, library manager 210 is configured to manage cryptographic libraries. In some embodiments, library manager 210 can include one or more cryptographic libraries. Each of the cryptographic libraries can be configured to be implemented in accordance with information provided by policy manager 208. In some examples, the library manager 210 can be managed using a user interface operated through application 200 and/or through another management application. In some examples, the library manager 210 can be managed by an API used to build configurations related user interface applications. In some examples, policy manager 208 may have access to one or more user-defined, enterprise policies and/or autonomously compiled list of policies dictating the operation of cryptographic provider 320. The list of policies affect how library manager 208 operates to manage implementation of various cryptographic features governed by cryptographic libraries.

In some examples, the policy engine 218 may include mapping between contextual information (e.g., user context data 222) associated with the user and one or more cipher solutions. A cipher solution may be a framework or configuration identifying one or more algorithms and/or libraries for handling cryptographic operations. In the above examples, a software system or application may be used within an organization to configure the policy engine 218. The application may configure the policy engine 218 with policies for data centers, edge computing environments, federated cloud information, and other infrastructure components. The application may allow a user to create, modify, and maintain cryptography operations within the organization after configuring the components with the policy engine 218. An example policy may suggest that if a user or client device is outside the company network then use a TLS 1.3 protocol for cryptographic operations. An example policy may suggest if a communication from the client device is related to a health care application then use FIPS-certified suite. An example policy may suggest if the application 200 includes confidential product roadmap information or intellectual property then use a hybrid quantum safe cipher suite for the communication involving the application.

In some examples, the policy manager may map contextual information with a class or a tag instead of a specific library or algorithm. The nature of the class may be determined by a user of cryptographic selection system 201. A class may identify a level of crypto security that should be used and further provide distinctions that an organization would find meaningful. For example, different classes may be designated for different categories such as top secret, confidential, FIPS, non-FIPS, hand-held device policy, server policy, and the like.

In some examples, a cryptographic standard may be designated as a class that is matched to tags registered within a library. In the above example, according to an example policy, if the user of client device 310 is operating in Iran and provides a request to access classified data, then a cipher solution associated with a class tag "Class: Classified" may be used. In the cryptographic library (e.g., 214) there may be multiple cipher solutions (e.g., quantum safe cipher solution). Different cipher solution matching the same tag may be used based on the context of use. For example, if the user is trying to access data from Iran instead of the United States a more robust cipher solution could be selected. In some examples, a tag may be a set of Boolean conditions which may chain several inputs with logical OR/AND conditions between the inputs (or contextual information). The tag may govern a selection of a cipher solution from registered cipher solutions in the library. For example, a tag may be if a user is a senior executive AND the user is "outside of the home country," then apply a cipher solution of class "XYZ." In some examples, a list of policies may be mapped to users' profiles. Accordingly, upon detecting a specific user, a set of policies and tags associated with the user's profile may be used for processing the user's request for actions involving cryptographic operations.

In some examples, the mapping table 211 may be a separate table from the policy engine 218 that includes mappings or pointers between tags or classes from the policy engine 218 to one or more libraries or cryptographic algorithms accessible by the library manager 210. The mapping table 211 may include mappings or pointers between one or more cryptographic algorithms or libraries (within algorithms table 216) and one or more policy data (e.g., class or tags associated with the policy engine 218). The mapping table 211 may act in conjunction with a policy engine or can also take over the functions of the policy engine (see, e.g., policy manager 208 from FIG. 2). Alternatively, the mapping table 211 may be an expanded policy engine 218. Specifically, the mapping table 211 may be a policy engine 218 that includes mappings or pointers for contextual information, a list of policies, a list of libraries, a list of algorithms, and the like.

In the above examples, a user of the client device 310 may request to access one or more secure data or resources associated with the application 200. Accordingly, a user request for accessing secure data or resources may be generated. In some examples, upon generating the user request, the client device 310 may direct the user request to an IP address (using IPv4 or IPv6 protocol format) of a server hosting the application 200. The client device 310 may direct the packets containing the user request and user's contextual information to the application 200. The contextual information may include information associated with the user, the client device 310, the network connection used by the user, or any other information associated with the user, device and/or network used by the client device 310. The contextual information can include a location of the client device 310, determined using, e.g., an IP location or GPS location of client device 310. The contextual information may be determined when a user of the client device 310 requests an access to certain applications or data. The contextual information is shared with the policy engine 218 for the policy engine 218 to select an appropriate cipher solution. Contextual information can also change after the request for access and while the data is being accessed. For example, if client device 310 is a portable device, a location of client device 310 can change, which can trigger an evaluation to determine whether the cipher solution needs to be changed.

In some examples, different sets of mechanisms may be used to collect contextual information to be used by the cryptographic selection system 201. The application 200 may provide context information to the provider 204 (or a processor associated with cryptographic selection system 201) using API calls. In some examples, the provider 204 may check operating system or container level information including configuration data for application 200 and client device 310 to determine contextual information. Further, information about the user's configuration may help determine contextual information. For example, if the application 200 is configurable using API or UI, the provider may determine that the application 200 may be using a certain standardized approach (e.g., FEDRAMP). In some examples, contextual information may be determined based on inspecting packets from the client device 310. In some examples, an organization may have software that collects the contextual information and makes the information available via an API or file that is available to the policy manager 208. Alternatively, the policy manager 208 may collect the activities associated with the contextual information from the operating system and other information sources.

In the above examples, to further process the user's request, the crypto shim 206 may intercept a call or request for cryptographic operations within the application 200 and redirects the calls or the requests to the cryptographic provider 204. Within the application 200, security operations may be performed over the cryptographic selection system 201. In the above examples, the cryptographic provider 204 or policy manager 208 may obtain and analyze the contextual information received. For example, the cryptographic provider 204 may identify the location of the user's device based on the contextual information. Similarly, the cryptographic provider 204 may determine other information specific to the user, user device, network security of the user device, and type of access requested by the user.

In some examples, a device or client associated with the provider 204 may obtain contextual information by requesting a communication session with an application server associated with the application 200 and/or client device 310. The context information is then used by the policy manager 208 to make an automated decision on which cipher solution to use or change in the configured cipher solution. In some examples, if the user requests access to highly sensitive data from the application 200, the application 200 can signal the policy engine 218 to invoke a change in a cipher solution based on the changed data access context (e.g., location of the user device 310).

The cryptographic provider 204 may further compare the contextual information with corresponding policies and tags/classes within the policy engine 218. The policy engine 218 (or the cryptographic provider 204) may determine a cipher solution (or selection of libraries and/or algorithms) for performing the cryptographic operations for processing the user request.

In the above examples, upon determining the cipher solution for processing the user's request, the cryptographic provider 204 executes the one or more algorithms according to the cipher solution to authenticate or process the user's request. The one or more cryptographic algorithms can include a one way hash function, symmetric key encryption, public key encryption, digital signature, and other types of predefined or customized cryptographic algorithms. Accordingly, proper security measures are followed in processing the user's request to ensure secure communication. In the above examples, a policy and libraries (or algorithms within the libraries) are instantiated in real-time for configuring the cipher solution based on the contextual information.

In alternative examples, the cryptographic provider 204 may have a default or present cipher solution defined for all user's requests. Accordingly, upon receiving the user's request and contextual information, the cryptographic provider 204 may evaluate the present or default framework configured for processing the user's request. In some examples, the cryptographic provider 204 may determine that the present cipher solution (e.g., cryptographic algorithms) is not suggested for processing the user's request based on the received contextual information and the mapping table 211. In the above examples, the cryptographic provider 204 may change or adjust the present cipher solution to include one or more different cryptographic algorithms and/or libraries. Alternatively, the cryptographic provider 204 may determine that the current framework does not need to be updated in accordance with the contextual information.

In alternative examples, the cryptographic provider 204 may compare contextual information with the contextual information associated with the present or default configuration or framework for performing cryptographic operations. If the contextual information is unchanged, the provider 204 does not further evaluate the contextual information against the mapping table 211 and uses the default or present framework for processing the user's request.

In some examples, in response to determining that the present or default cipher solution needs to be updated, the cryptographic provider 204 updates or reconfigures the cipher solution based on the contextual information and mapping table 211. Upon implementing an update to the cipher solution, the cryptographic provider processes the user request by executing the selected cryptographic algorithm(s) in accordance with the updated cipher solution. The above described process may be performed every time a user request needs to be processed using cryptographic operations within the application 200.

In the above examples, as discussed, the policy manager 208 may determine which cipher solution to use based on contextual information. The policy engine 218 may take a set of inputs (e.g., context information), process the inputs with rules or policies, and output a tag representing a class of a cipher solution needed for processing the user request. Upon receiving information about required cipher solution from the policy manager 208, the information may be forwarded to the library manager 210 using one or more APIs supported by the library manager 210.

Upon receiving the information, the library manager 210 may identify correct libraries and obtain access to the libraries using either direct or intermediary mode. In the above examples, a cryptographic library may have one or more cipher solutions with parameters registered and tagged to a same tag that is outputted from the policy manager 208. In direct mode, the library manager 210 may make a call to access the required libraries and/or algorithms and direct the output (pointers to the set of libraries or algorithms) back to cryptographic provider 204 caller (e.g., application 200). In intermediary mode, the library manager 210 may make a call to access the required libraries and/or algorithms and direct the output (pointers to the set of libraries or algorithms) back to the cryptographic provider 204 caller (e.g., application 200) with no indirection turned off. In contrast, in intermediary mode with indirection turned off, the library manager 210 may make a call to access the required libraries and/or algorithms and in response only receives the specific libraries it requested. If the required library references other libraries, with indirection turned off, the library manager 210 does not retrieve the other libraries. A built-in indirection function may provide an access to a library and/or algorithm pointed-to by another library and/or algorithm.

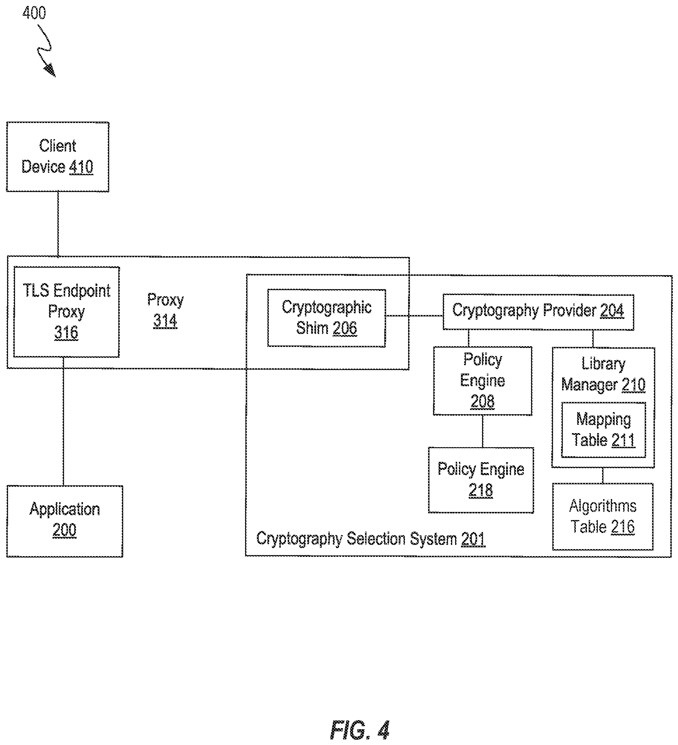

In the above examples, in response to the user's request, a call to the cryptographic provider 204 is directed to a specific cryptographic library, an algorithm family within a cryptographic library (from the algorithms table 216), or a specific function call associated with the algorithm family using different types of input parameters required by the algorithms. In other examples, the steps of communication between cryptographic provider 204, library manager 210 and policy manager 208 may vary with different methods of operations. Additional scenarios and examples of automated cipher solution selection and updates are described in FIG. 4-7.

FIG. 4 shows a block diagram illustrating an implementation of a cryptographic selection system outside a software application, in accordance with the embodiments described herein. A system 400 discloses an implementation of a cryptographic selection system 201 within a proxy component (e.g., proxy 314) instead of the application 200 (as shown in FIG. 3). Specifically, the system 400 discloses cryptographic shim 206 implemented within proxy 314. With implementation, as shown in FIG. 4, automated selection and configuration of cipher solution and applying cipher solution to a user's request under the cryptographic selection system 201 may be implemented prior to user accessing or communicating with application 200.

In some examples, a user's requests or queries from client device 310 are directed to the application 200 are received at a proxy 314. The proxy 314 may include functions, rules or operations for processing security related protocols, such as SSL or TLS. The proxy 314 may serve as a front-end authentication and communication dispatch system. For example, the proxy 314 may encrypt or decrypt network packets associated with the user's request.

In the above examples, the proxy 314 may act as a load balancer for the application 200 to incoming traffic from the internet and/or other networks. The proxy 314 may be deployed alongside the application 200 where the outside world interacts with the application 200 through the proxy 314. The proxy may be an envoy proxy, reverse proxy, or a different type of proxy embedded to the application 200. The proxy 314 may be capable of handling cryptographic operations involving modern cryptography standards.

In some examples, the proxy 314 may act as a load balancer for the application 200 to incoming traffic from the internet and/or other networks. Along with balancing incoming traffic, the proxy 314 may implement TCP (or SSL) protocols. The proxy 314 may include a TLS endpoint proxy 316. The TLS endpoint proxy 316 may act as an intermediary point between the client device and proxy 314, and used to establish and/or terminate TLS tunnels by decrypting and/or encrypting incoming and outgoing communications. The TLS endpoint proxy 316 may set up SSL or TLS connection on behalf of the client device and/or application 200. The proxy 314 may be deployed alongside the application 200 where the outside world interacts with the application 200 through the proxy 314.

In some examples, the system 400 may further include cryptographic selection system 201. The cryptographic selection system 201 enables automated configurations and adjustments to cipher solutions for providing secure data access and communications, as discussed in FIG. 3A. Specifically, the cryptographic selection system 201 enables automated selection and configuration of cryptographic libraries (or algorithms within libraries) based on contextual information (e.g., user context 222) or key facts surrounding the user and user device such as user's access level, the speed and/or characteristics of the network the user is accessing, the geographic location of the user, the sensitivity of data being protected, user roles participating in a data exchange, the network context, the characteristics of devices involved, the nature of the application, and the like, as described in FIG. 3.

In some examples, a user using the client device 310 may request to access one or more secure resources, request a secure communication, or perform some other actions involving the application 200. Accordingly, a user request from the client device 310 may be generated. In some examples, upon generating the user request, the client device 310 may direct the user request to an IP address (using IPv4 or IPv6 protocol format) of a server hosting the application 200.

In the above examples, the client device 310 may direct the packets containing the user request and user's contextual information to the application 200. The packets directed to the application 200 may be received at the proxy 314 within Transport Layer Security (TLS) agility 312. The proxy 314 may encrypt or decrypt network packets associated with the user's request and set up SSL or TLS connection on behalf of the client device and/or application 200. In some examples, TLS endpoint proxy 316 receives the user request via an established TLS tunnel and may decrypt the user request for further processing. In some examples, upon receiving the user request, the proxy 316 may handover cryptographic operations to cryptographic provider 204 via cryptographic shim 206. The crypto shim 206 may act as a library that intercepts a call or request for additional cryptographic operation within the proxy 314 and redirects the call or the request to the cryptographic provider 204.

In the above examples, the cryptographic provider 204 obtains and analyzes the contextual information using various methods described in FIG. 3 description. Similarly, the cryptographic provider 204 may determine other information specific to the user, user device, network security used by the user, and type of access requested by the user. The cryptographic provider 204 may further compare the contextual information with corresponding policies and classes or tags within the policy engine 218. The mapping table 211 may include mappings of one or more cryptographic algorithms and/or libraries to tags and/or classes within the policy engine 218. Based on the mapping table 211, the cryptographic provider 204 may determine a cipher solution for performing the additional cryptographic operations for processing the user request.

In the above examples, the cryptographic provider 204 may determine the cipher solution for processing the user's request. In the above examples, upon determining the cipher solution for processing the user's request, the cryptographic provider 204 executes the one or more algorithms according to the cipher solution or selected algorithms to process the user's request. In the above examples, a policy and libraries (or algorithms within the libraries) are instantiated in real-time for configuring the cipher solution based on contextual information associated with the user, client device 310, and/or network used by the client device 310.

In the above examples, upon processing the user's request, the request may be forwarded to the application 200 (or one or more servers associated with the application 200) for further processing of the user's request. Specifically, the application 200 may receive authorization or results based on the execution of the one or more algorithms by the cryptographic provider 204.

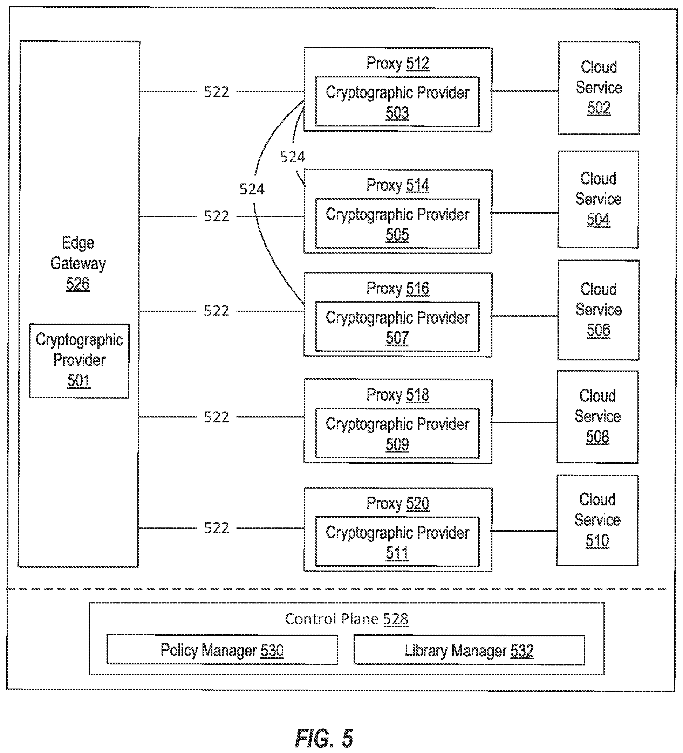

FIG. 5 shows a diagram depicting the operation of cloud services 502 - 510 implementing a cryptographic selection system. In some embodiments, cloud services 502-510 can all be different instances of the same application and in other embodiments, each one of cloud services 502-510 represents a different service. Each of cloud services 502-510 can be supported by a respective cryptographic provider 503-511. In some embodiments, cryptographic providers 503-511 can also include cryptographic shims to facilitate communication between a respective cloud service and its proxy. While cryptographic providers 503-511 are shown incorporated within proxies 512-520, cryptographic providers 503-511 can alternatively be incorporated within cloud services 502-510. Proxies 512 - 520 can each be communicatively coupled to edge gateway 526 by one of connections 522. Connections 522 can take many forms. For example, proxy 520 can be connected to edge gateway 526 using a TCP, UDP or TLS connection. Proxies 512 - 520 can also be configured to establish direct communication channels 524 between cloud services 502-510. Exemplary direct communication channels 524 are illustrated in FIG. 5 and show a way in which cloud services 502, 504 and 506 can communicate and exchange information without running the communications through edge gateway. Such a configuration may be desirable where cloud services have shared functions and are in need of low latency communications. Direct communications can also be more secure and may allow for the use of lower overhead cryptography features thereby reducing computational loading associated with the communication.

Control plane 528 of FIG. 5 can represent a portion of a computing system that controls how data packets are forwarded to cloud services 502-510. In this particular embodiment, control plane 528 can also be responsible for synchronizing and distributing cryptographic policies established by enterprise policies 220 (see FIG. 2)using centralized cryptographic provider 501, policy manager 530 and library manager 532. In such a configuration, policy manager 530 and library manager 532 can be configured to store policies and cryptographic libraries supporting cloud services 502 - 510 and cryptographic providers 501-511. While establishing separate policy managers and library managers for each of cryptographic providers 501 - 511 is possible, having a centralized set of policies located in the control plane reduces redundant software components and makes communication with enterprise services outside of edge gateway 526 more straightforward. In addition to managing cryptography selection tasks for each of the cloud services, control plane 528 can also be configured to manage TLS certificate issuance, telemetry collection and policy distribution.

In some embodiments, outgoing communications from multiple cloud services that are all intended for a single recipient and are routed through edge gateway 526 might all implement the same cryptographic features, allowing for a single call to the policy manager 530 within control plane 528 to handle the cryptographic feature implementation for the multiple cloud services. It should be noted that, edge gateway 526 can also be used to facilitate communication between policy manager 530, library manager 532 and individual cloud services when handling requests that apply only to a particular one of cloud services 502-510.

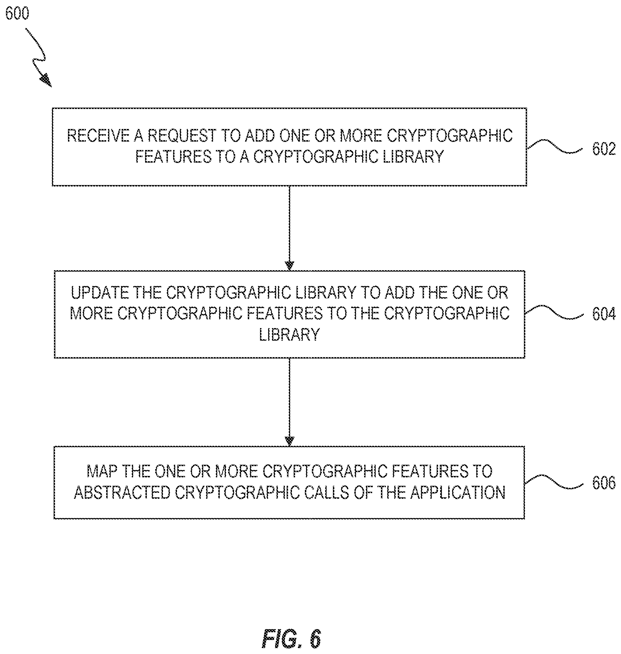

FIG. 6 shows a flow diagram illustrating a method for adding cryptographic features to a cryptographic library. At step 602, a request to add one or more cryptographic features to a cryptographic library of a cryptographic provider associated with an application is received. Such a task can be requested by a network security manager or a developer responsible for the application or service associated with the cryptographic library. The request will be verified to confirm that the requested cryptographic features are secure and compatible with the associated application. At step 604, the cryptographic library is updated to add the one or more cryptographic features to the cryptographic library. At step 606, the one or more cryptographic features are mapped to abstracted cryptographic API calls of the application. In some embodiments, this mapping can be implemented by autonomously updating a mapping table of a library manager to associate tags or classes with the added cryptographic features. In some embodiments, the requestor can request association of the added cryptographic feature with one or more tags or classes the added cryptographic feature should be associated with. In the case, the updated mapping results in the creation of new tags the library manager can communicate with the policy manager to make the policy manager aware of the newly created tags. In some embodiments, the policy manager can be configured to provide to communicate the newly added functionality and make it available to network administrators.

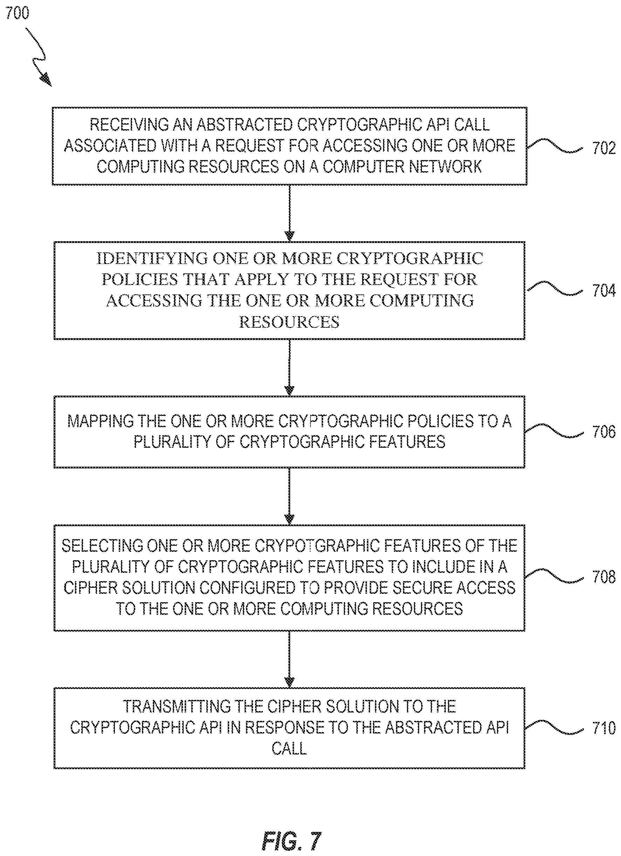

FIG. 7 shows a flow diagram illustrating a method for implementing a cipher solution for providing secure access to an application or service using a cryptographic selection system. At step 702, an abstracted cryptographic API call associated with a request for cryptographic operations is received. Cryptographic operations can take many forms. In some embodiments, the cryptographic operations can take the form of encryption that facilitates secure access to one or more computing resources on a computer network. Cryptographic operations can also be applied to a particular file or object. For example, the cryptographic operations could take the form of applying a digital signature or encryption to an email. It should be noted that the cryptographic selection system can also be initiated in response to an event trigger. For example an event trigger could fire in response to a rules change or a change in the manner an application or web service is being used. In some embodiments, the abstracted API call is received at a cryptographic shim of a cryptographic selection system that is configured to intercept abstracted cryptographic API calls initiated by an API service of an application or web service. The cryptographic shim can also be configured to adjust the abstracted cryptographic API calls to improve compatibility of the abstracted cryptographic API calls with a cryptographic provider prior to sending the adjusted abstracted cryptographic API calls to the cryptographic provider.

The cryptographic provider sends data from the abstracted cryptographic API call to a policy manager for further evaluation. At step 704 the policy manager is configured to identify one or more cryptographic policies that apply to the request for cryptographic operations. The policy manager identifies the cryptographic policies by querying a policy engine containing policies that each specify one or more particular tags or classes that correspond to a context of use associated with a particular abstracted cryptographic API call. For example, a first policy can be associated with any use of a particular application or group of applications and specify that any use of the application or group of applications be associated with a first tag dictating the encryption of communications with the application or group of applications using encryption that exceeds a first minimum threshold. A second policy stored within the policy engine can be associated with a particularly sensitive feature of the application or group of applications and specify that any use of the particularly sensitive feature employ encryption exceeding a second minimum threshold higher than the first minimum threshold. In such a case, both tags could still be associated with the abstracted cryptographic API call but the second tag would supersede the first policy for any uses of the particularly sensitive feature. In some embodiments, both tags could help to form a cipher solution capable of changing encryption types in response to a user transitions between different more or less features of an application without making an additional abstracted cryptographic API call anytime a context of use changes.

At step 706, the tags identified by the policy manager and policy engine are transmitted to a library manager where the one or more cryptographic policies are mapped to a plurality of cryptographic features using a mapping table of the library manager. At step 708, the library manager is responsible for selecting one or more cryptographic features from the plurality of cryptographic features to include in a cipher solution configured to provide the cryptographic operations. The library manager can be responsible for maintaining the mapping table by updating it so that tag or class references correspond to newly added features stored within one or more cryptographic libraries. In selecting the one or more cryptographic features, the library manager can be configured to select cryptographic features that aren't overly burdensome for a particular use case. For example, while a cryptographic library managed by the library manager may include cryptographic features capable of applying extremely high levels of encryption, the library manager can be tuned to select a set of cryptographic features that are optimized for performance in light of the requirements specified by the tags. This would typically involve selecting the highest performing cryptographic features from a pool of available cryptographic features that all fall within the requirements defined by the received tags or classes. This doesn't mean the library manager would always select the least secure cryptographic features allowable by the policies. For example, in the case a device is known to have hardware acceleration for a particular set of cryptographic features a more secure cryptographic feature supported by the hardware acceleration might run faster on that device than a less secure cryptographic feature not supported by the hardware acceleration.

At step 710, the library manager prepares the cryptographic features making up the cipher solution and transmits any information needed to support the cryptographic features back to the cryptographic API by way of the cryptographic provider and the cryptographic shim. The cryptographic shim adapts the information received from the cryptographic provider for use by the application or web service prior to the information being received back at the cryptographic API of the application or web service.

The foregoing description, for purposes of explanation, used specific nomenclature to provide a thorough understanding of the described embodiments. However, it will be apparent to one skilled in the art that the specific details are not required in order to practice the described embodiments. Thus, the foregoing descriptions of specific embodiments are presented for purposes of illustration and description. They are not intended to be exhaustive or to limit the described embodiments to the precise forms disclosed. It will be apparent to one of ordinary skill in the art that many modifications and variations are possible in view of the above teachings.

## Claims

1. A method (700) of operating a cryptographic selection system, the method comprising:
receiving (702) an abstracted cryptographic API call associated with a request for cryptographic operations from a cryptographic API;
identifying (704) one or more cryptographic policies that apply to the request for the cryptographic operations;
mapping (706) the one or more cryptographic policies to a plurality of cryptographic features;
selecting (708) one or more cryptographic features of the plurality of cryptographic features to include in a cipher solution configured to provide the cryptographic operations, wherein the cipher solution satisfies each of the one or more cryptographic policies that apply to the request for the cryptographic operations; and
transmitting (710) the cipher solution to the cryptographic API in response to the abstracted API call.

2. The method (700) of claim 1, wherein identifying (704) the one or more cryptographic policies comprises identifying characteristics of the request for providing the cryptographic operations, wherein the characteristics are selected from the group consisting of: a location of a device making the request, a type of the device and an account associated with the request.

3. The method (700) of claim 1, wherein identifying (704) the one or more cryptographic policies comprises querying a policy engine containing a plurality of cryptographic policies for the one or more cryptographic policies that apply to the request for the cryptographic operations.

4. The method (700) of claim 1, wherein identifying (704) the one or more cryptographic policies comprises identifying characteristics of the request for the cryptographic operations, wherein the characteristics are selected from the group consisting of: computing resource sensitivity, an origin of a device making the request, a type of the device and an account associated with the request.

5. The method (700) of claim 1, wherein each of the one or more cryptographic policies includes one or more tags or classes that identify minimum cryptographic feature requirements for the request.

6. The method (700) of claim 5, wherein mapping (706) the one or more cryptographic policies to the plurality of cryptographic features comprises utilizing the one or more tags to identify any cryptographic features contained within one or more cryptographic libraries meeting the minimum cryptographic feature requirements.

7. The method (700) of claim 6, wherein the one or more of the plurality of cryptographic features are selected to optimize a speed at which the cipher solution provides the cryptographic operations.

8. The method (700) of claim 1, wherein the one or more cryptographic features is one of a cryptographic algorithm, a cryptographic protocol, a function and a combination of cryptographic algorithms, protocols or functions.

9. The method (700) of claim 1, wherein the cryptographic operations provide secure access to one or more computing resources.

10. The method (700) of claim 1, further comprising
receiving (602) a request to add a cryptographic feature to a cryptographic library managed by a library manager;
updating (604) the cryptographic library to add the cryptographic feature to the cryptographic library; and
mapping (606) the cryptographic feature to an abstracted cryptographic API call of the application.

11. A cryptographic selection system (201), comprising:
a cryptographic shim (206), configured to receive an abstracted cryptographic API call associated with a request for cryptographic operations from a cryptographic API (202);
a policy manager (208), configured to identify one or more cryptographic policies that apply to the request for the cryptographic operations; and
a library manager (210), configured to
map the one or more cryptographic policies to a plurality of cryptographic features;
select one or more cryptographic features of the plurality of cryptographic features to include in a cipher solution configured to provide the cryptographic operations, wherein the cipher solution satisfies each of the one or more cryptographic policies that apply to the request for the cryptographic operations; and
transmit the cipher solution to the cryptographic API (202) in response to the abstracted API call.

12. The cryptographic selection system (201) of claim 11, wherein
the policy manager (208) is further configured to manage a plurality of cryptographic policies, the plurality of cryptographic policies being established at least in part by network policies of a network hosting an application supported by a cryptographic provider (204); and
the library manager (210) is further configured to manage a plurality of cryptographic libraries (212, 214).

13. The cryptographic selection system (201) of claim 11, further comprising a processor configured to:
receive a request to add a cryptographic feature to a cryptographic library (212, 214) managed by the library manager (210);
update the cryptographic library (212, 214) to add the cryptographic feature to the cryptographic library (212, 214); and
map the cryptographic feature to an abstracted cryptographic API call of the application.

14. A non-transitory computer-readable storage medium storing instructions configured to be executed by one or more processors to carry out the steps of the method of any one of claims 1 to 10.

## Patentansprüche

1. Ein Verfahren (700) zum Betreiben eines kryptographischen Auswahlsystems, wobei das Verfahren aufweist:
Empfangen (702) eines abstrahierten kryptographischen API-Aufrufs, der mit einer Anfrage für kryptographische Operationen von einer kryptographischen API assoziiert ist;
Identifizieren (704) einer oder mehrerer kryptographischer Richtlinien, die für die Anfrage für die kryptographischen Operationen gelten;
Abbilden (706) der einen oder der mehreren kryptographischen Richtlinien auf eine Mehrzahl von kryptographischen Merkmalen;
Auswählen (708) eines oder mehrerer kryptographischer Merkmale der Mehrzahl von kryptographischen Merkmalen, die in eine Chiffrenlösung aufgenommen werden sollen, die konfiguriert ist, um die kryptographischen Operationen bereitzustellen, wobei die Chiffrenlösung jede der einen oder der mehreren kryptographischen Richtlinien erfüllt, die für die Anfrage für die kryptographischen Operationen gelten; und
Übertragen (710) der Chiffrenlösung an die kryptographische API als Reaktion auf den abstrahierten API-Aufruf.

2. Das Verfahren (700) gemäß Anspruch 1, wobei das Identifizieren (704) der einen oder der mehreren kryptographischen Richtlinien das Identifizieren von Eigenschaften der Anfrage zum Bereitstellen der kryptographischen Operationen aufweist, wobei die Eigenschaften ausgewählt sind aus der Gruppe bestehend aus: einem Standort einer Vorrichtung, die die Anfrage stellt, einem Typ der Vorrichtung und einem Account, der mit der Anfrage assoziiert ist.

3. Das Verfahren (700) gemäß Anspruch 1, wobei das Identifizieren (704) der einen oder der mehreren kryptographischen Richtlinien das Abfragen einer Richtlinien-Engine aufweist, die eine Mehrzahl von kryptographischen Richtlinien für die eine oder die mehreren kryptographischen Richtlinien enthält, die für die Anfrage für die kryptographischen Operationen gelten.

4. Das Verfahren (700) gemäß Anspruch 1, wobei das Identifizieren (704) der einen oder der mehreren kryptographischen Richtlinien das Identifizieren von Eigenschaften der Anfrage für die kryptographischen Operationen aufweist, wobei die Eigenschaften ausgewählt sind aus der Gruppe bestehend aus: einer Rechenressourcenempfindlichkeit, einer Herkunft einer Vorrichtung, die die Anfrage stellt, einem Typ der Vorrichtung und einem Account, der mit der Anfrage assoziiert ist.

5. Das Verfahren (700) gemäß Anspruch 1, wobei jede der einen oder der mehreren kryptographischen Richtlinien ein oder mehrere Tags oder Klassen aufweist, die minimale kryptographische Merkmalsanforderungen für die Anfrage identifizieren.

6. Das Verfahren (700) gemäß Anspruch 5, wobei das Abbilden (706) der einen oder der mehreren kryptographischen Richtlinien auf die Mehrzahl von kryptographischen Merkmalen das Verwenden des einen oder der mehreren Tags aufweist, um kryptographische Merkmale zu identifizieren, die in einer oder mehreren kryptographischen Bibliotheken enthalten sind, die die minimalen kryptographischen Merkmalsanforderungen erfüllen.

7. Das Verfahren (700) gemäß Anspruch 6, wobei das eine oder die mehreren der Mehrzahl von kryptographischen Merkmalen ausgewählt sind, um eine Geschwindigkeit zu optimieren, mit der die Chiffrenlösung die kryptographischen Operationen bereitstellt.

8. Das Verfahren (700) gemäß Anspruch 1, wobei das eine oder die mehreren kryptographischen Merkmale eines von einem kryptographischen Algorithmus, einem kryptographischen Protokoll, einer Funktion und einer Kombination von kryptographischen Algorithmen, Protokollen oder Funktionen sind.

9. Das Verfahren (700) gemäß Anspruch 1, wobei die kryptographischen Operationen einen sicheren Zugriff auf eine oder mehrere Rechenressourcen bereitstellen.

10. Das Verfahren (700) gemäß Anspruch 1, ferner aufweisend
Empfangen (602) einer Anfrage zum Hinzufügen eines kryptographischen Merkmals zu einer kryptographischen Bibliothek, die von einem Bibliotheksmanager verwaltet wird;
Aktualisieren (604) der kryptographischen Bibliothek, um das kryptographische Merkmal zu der kryptographischen Bibliothek hinzuzufügen; und
Abbilden (606) des kryptographischen Merkmals auf einen abstrahierten kryptographischen API-Aufruf der Anwendung.

11. Ein kryptographisches Auswahlsystem (201), aufweisend:
einen kryptographischen Shim (206), der konfiguriert ist, um einen abstrahierten kryptographischen API-Aufruf zu empfangen, der mit einer Anfrage für kryptographische Operationen von einer kryptographischen API (202) assoziiert ist;
einen Richtlinienmanager (208), der konfiguriert ist, um eine oder mehrere kryptographische Richtlinien zu identifizieren, die für die Anfrage für die kryptographischen Operationen gelten; und
einen Bibliotheksmanager (210), der konfiguriert ist zum
Abbilden der einen oder der mehreren kryptographischen Richtlinien auf eine Mehrzahl von kryptographischen Merkmalen;
Auswählen eines oder mehrerer kryptographischer Merkmale der Mehrzahl von kryptographischen Merkmalen, die in eine Chiffrenlösung aufgenommen werden sollen, die konfiguriert ist, um die kryptographischen Operationen bereitzustellen, wobei die Chiffrenlösung jede der einen oder der mehreren kryptographischen Richtlinien erfüllt, die für die Anfrage für die kryptographischen Operationen gelten; und
Übertragen der Chiffrenlösung an die kryptographische API (202) als Reaktion auf den abstrahierten API-Aufruf.

12. Das kryptographische Auswahlsystem (201) gemäß Anspruch 11, wobei
der Richtlinienmanager (208) ferner konfiguriert ist, um eine Mehrzahl von kryptographischen Richtlinien zu verwalten, wobei die Mehrzahl von kryptographischen Richtlinien zumindest teilweise durch Netzwerkrichtlinien eines Netzwerks eingerichtet wird, das eine Anwendung hostet, die von einem kryptographischen Anbieter (204) unterstützt wird; und
der Bibliotheksmanager (210) ferner konfiguriert ist, um eine Mehrzahl von kryptographischen Bibliotheken (212, 214) zu verwalten.

13. Das kryptographische Auswahlsystem (201) gemäß Anspruch 11, ferner aufweisend einen Prozessor, der konfiguriert ist zum:
Empfangen einer Anfrage zum Hinzufügen eines kryptographischen Merkmals zu einer kryptographischen Bibliothek (212, 214), die von dem Bibliotheksmanager (210) verwaltet wird;
Aktualisieren der kryptographischen Bibliothek (212, 214), um das kryptographische Merkmal zu der kryptographischen Bibliothek (212, 214) hinzuzufügen; und
Abbilden des kryptographischen Merkmals auf einen abstrahierten kryptographischen API-Aufruf der Anwendung.

14. Ein nicht-transitorisches computerlesbares Speichermedium, das Anweisungen speichert, die konfiguriert sind, um von einem oder mehreren Prozessoren ausgeführt zu werden, um die Schritte des Verfahrens gemäß einem der Ansprüche 1 bis 10 auszuführen.

## Revendications

1. Procédé (700) d'exploitation d'un système de sélection cryptographique, le procédé comprenant les étapes consistant à :
recevoir (702) un appel d'API cryptographique abstrait associé à une demande d'opérations cryptographiques à partir d'une API cryptographique ;
identifier (704) une ou plusieurs politiques cryptographiques qui s'appliquent à la demande pour les opérations cryptographiques ;
mapper (706) une ou plusieurs politiques cryptographiques par rapport à une pluralité de caractéristiques cryptographiques ;
sélectionner (708) une ou plusieurs caractéristiques cryptographiques de la pluralité de caractéristiques cryptographiques à inclure dans une solution de chiffrement configurée pour fournir les opérations cryptographiques, dans lequel la solution de chiffrement satisfait chacune d'une ou plusieurs politiques cryptographiques qui s'appliquent à la demande pour les opérations cryptographiques ; et
transmettre (710) la solution de chiffrement à l'API cryptographique en réponse à l'appel d'API abstrait.

2. Procédé (700) selon la revendication 1, dans lequel l'identification (704) d'une ou plusieurs politiques cryptographiques comprend une identification de caractéristiques de la demande pour fournir les opérations cryptographiques, dans lequel les caractéristiques sont choisies dans le groupe comprenant : un emplacement d'un dispositif réalisant la demande, un type de dispositif et un compte associé à la demande.

3. Procédé (700) selon la revendication 1, dans lequel l'identification (704) d'une ou plusieurs politiques cryptographiques comprend l'interrogation d'un moteur de politiques contenant une pluralité de politiques cryptographiques pour l'une ou plusieurs politiques cryptographiques qui s'appliquent à la demande pour les opérations cryptographiques.

4. Procédé (700) selon la revendication 1, dans lequel l'identification (704) d'une ou plusieurs politiques cryptographiques comprend une identification de caractéristiques de la demande pour les opérations cryptographiques, dans lequel les caractéristiques sont choisies dans le groupe comprenant : la sensibilité des ressources de calcul, une origine d'un dispositif réalisant la demande, un type du dispositif et un compte associé à la demande.

5. Procédé (700) selon la revendication 1, dans lequel chacune d'une ou plusieurs politiques cryptographiques inclut une ou plusieurs étiquettes ou classes qui identifient des exigences de caractéristiques cryptographiques minimales pour la demande.

6. Procédé (700) selon la revendication 5, dans lequel le mappage (706) d'une ou plusieurs politiques cryptographiques par rapport à la pluralité de caractéristiques cryptographiques comprend l'utilisation d'une ou plusieurs étiquettes pour identifier toutes les caractéristiques cryptographiques contenues dans une ou plusieurs bibliothèques cryptographiques répondant aux exigences de caractéristiques cryptographiques minimales.

7. Procédé (700) selon la revendication 6, dans lequel une ou plusieurs caractéristiques parmi la pluralité de caractéristiques cryptographiques sont sélectionnées pour optimiser une vitesse à laquelle la solution de chiffrement fournit les opérations cryptographiques.

8. Procédé (700) selon la revendication 1, dans lequel la ou les caractéristiques cryptographiques sont l'une parmi un algorithme cryptographique, un protocole cryptographique, une fonction et une combinaison d'algorithmes cryptographiques, de protocoles ou de fonctions.

9. Procédé (700) selon la revendication 1, dans lequel les opérations cryptographiques fournissent un accès sécurisé à une ou plusieurs ressources informatiques.

10. Procédé (700) selon la revendication 1, comprenant en outre une réception (602) d'une demande d'ajout d'une caractéristique cryptographique à une bibliothèque cryptographique gérée par un gestionnaire de bibliothèques ;
une mise à jour (604) de la bibliothèque cryptographique pour ajouter la caractéristique cryptographique à la bibliothèque cryptographique ; et
un mappage (606) de la caractéristique cryptographique à un appel d'API cryptographique abstrait de l'application.

11. Système de sélection cryptographique (201), comprenant :
une cale cryptographique (206), configurée pour recevoir un appel d'API cryptographique abstrait associé à une demande d'opérations cryptographiques provenant d'une API cryptographique (202) ;
un gestionnaire de politiques (208), configuré pour identifier une ou plusieurs politiques cryptographiques qui s'appliquent à la demande pour les opérations cryptographiques ; et
un gestionnaire de bibliothèques (210), configuré pour
mapper l'une ou plusieurs politiques cryptographiques par rapport à une pluralité de caractéristiques cryptographiques ;
sélectionner une ou plusieurs caractéristiques cryptographiques de la pluralité de caractéristiques cryptographiques à inclure dans une solution de chiffrement configurée pour fournir les opérations cryptographiques, dans lequel la solution de chiffrement satisfait chacune d'une ou plusieurs politiques cryptographiques qui s'appliquent à la demande pour les opérations cryptographiques ; et
transmettre la solution de chiffrement à l'API cryptographique (202) en réponse à l'appel d'API abstrait.

12. Système de sélection cryptographique (201) selon la revendication 11, dans lequel :
le gestionnaire de politiques (208) est en outre configuré pour gérer une pluralité de politiques cryptographiques, la pluralité de politiques cryptographiques étant établie au moins en partie par des politiques de réseau d'un réseau hébergeant une application prise en charge par un fournisseur cryptographique (204) ; et
le gestionnaire de bibliothèques (210) est en outre configuré pour gérer une pluralité de bibliothèques cryptographiques (212, 214).

13. Système de sélection cryptographique (201) selon la revendication 11, comprenant en outre un processeur configuré pour :
recevoir une demande d'ajout d'une caractéristique cryptographique à une bibliothèque cryptographique (212, 214) gérée par le gestionnaire de bibliothèques (210) ;
mettre à jour la bibliothèque cryptographique (212, 214) pour ajouter la caractéristique cryptographique à la bibliothèque cryptographique (212, 214) ; et
mapper la caractéristique cryptographique par rapport à un appel d'API cryptographique abstrait de l'application.

14. Support de stockage non transitoire lisible par ordinateur stockant des instructions configurés pour être exécutées par un ou plusieurs processeurs afin de réaliser les étapes du procédé selon l'une quelconque des revendications 1 à 10.
